# EUROPEAN PATENT APPLICATION

(11) **EP 4 686 399 A1**
(43) Date of publication of application: **04.02.2026**
(21) Application number: 25192108.6
(22) Date of filing: 28.07.2025
(51) Int. Cl.: A01G 31/02

(54) **VERTICAL FARMING CONTAINER WITH ADJUSTABLE LIGHTING SYSTEM**

(30) Priority: 01.08.2024 EP 24192358
(71) Applicant: suiteg GmbH, 50858 Köln (DE)
(72) Inventor: VESPER, Martin, 42399 Wuppertal (DE); DECKERS, Volker, 52538 Gangelt (DE)
(74) Representative: Kutzenberger Wolff & Partner

(57) **Abstract**

The present invention relates to a Vertical farming container (1) comprising
multiple planting walls (20), wherein the planting walls (20) are arranged parallel to each other, wherein the planting walls (20) are movable towards each other,
a container ceiling (3), and
a lighting system (10) that is directly or indirectly connected to the container ceiling (3), wherein the lighting system (10) comprises at least one light emitting element (12), particularly a controllable LED (12),
wherein the light emitting element (12) is pivotable relative to the container ceiling (3) between an operating position and a non-operating position.

## Description

### Background

The present invention relates to a vertical farming container. Traditionally, plants are grown by farmers by way of field cultivation. For this purpose, specific atmospheric conditions are indispensable for successful cultivation. In particular, the soil must be rich in humus and hence provide sufficient amounts of nutrients. Furthermore, the soil as well as the ambient air must provide enough humidity so as to promote plant growth. Moreover, adequate radiation must be ensured. In addition and importantly, plant cultivation is inextricably linked to a provision of sufficient acreage.

The global population and therefore the demand for sufficient food is increasing incessantly. At the same time - among others due to anthropogenic industrial emissions and other human interferences in the natural planetary systems over the course of globalization - the climate is subject to long-term changes, especially to unfavorable changes from the standpoint of plant cultivation: Heat waves and water scarcity, but also a lack of soil nutrients as a consequence of monocultural farming et cetera are some of the challenging phenomena and examples for the deterioration of cultivation conditions that farmers are currently faced with and most likely will be confronted with on a regular basis in the future. According to scientific disclosures the adverse agricultural conditions will subsist and the challenging phenomena will occur even more frequently, when steady, predictable and controllable cultivation conditions are actually required for optimal agricultural outputs.

One approach in solving this problem can be found in the so-called inhouse or vertical farming technologies of growing crops in vertically stacked layers arranged inside buildings, containers or the like. This technology incorporates controlled-environment agriculture in order to optimize plant growth and to increase crop yield and goes along with a smaller cropland. Furthermore, vertical farming enables a decrease of human interference in the cultivation process due to automatization which increases the overall performance since machines don't need sleep or vacation and are not affected by sentiment fluctuations and thus are much less prone to errors. Automatization is expected to increase over time along with developments in machine learning and artificial intelligence. Also, vertical farming goes hand in hand with the benefit of reducing transportation efforts since the cultivation can be carried out in urban territories, close to consumers, thereby rendering pollutive and costly shipments superfluous.

Such vertical farming technologies, facilities or containers are for instance disclosed in the documents WO 2023/175133 A1, WO 2023/175134 A1 and WO 2023/175135 A1.

However, a current drawback of vertical farming facilities, especially vertical farming containers, is that due to lack of vast cultivation areas as can be found in traditional agricultural environments, spatial challenges arise. Particularly, the operation of a vertical farming container or components thereof, such as planting walls, can be complicated due to lack of space. Also, in case maintenance or repairs need to be done or in case the container needs to be accessed by personnel for other reasons, sufficient space must be provided for a simple and efficient operation of the container.

### Disclosure of the invention

It is an object of the present invention to provide an optimized vertical farming container addressing at least one of the above-mentioned challenges and/or drawbacks.

The object of the present invention is achieved by a vertical farming container comprising
multiple planting walls, wherein the planting walls are arranged parallel to each other, wherein the planting walls are movable towards each other,
a container ceiling, and
a lighting system that is directly or indirectly connected to the container ceiling,

wherein the lighting system comprises at least one light emitting element, particularly a controllable LED,
wherein the light emitting element is pivotable relative to the container ceiling between an operating position and a non-operating position.

According to the present invention, an optimized vertical farming container is provided as a pivotable light emitting element allows for many advantages. For instance, by pivoting the light emitting element from an operating position to a non-operating position, it is advantageously possible to increase space within the container for a variety of purposes. The possibility of moving the light emitting element into a non-operating position can be especially beneficial when planting walls need to be moved, for instance when other plants need to be implanted into the planting walls or the container or parts thereof need to be cleaned or repaired or maintenance need to be carried out. Furthermore, providing more space through pivoting the light emitting element can avoid collisions inside the container, especially collisions with movable components of the container such as planting walls. By increasing the overall space inside the container through pivoting of the light emitting element and by avoiding collisions it is also advantageously possible to reduce costs due to possible accidents that henceforward can be avoided.

The planting walls can be moved particularly translationally towards each other, for instance by means of rails arranged or formed in a container floor. It is also conceivable that rails or guide bars or the like for moving the planting walls are formed in the container ceiling. Therefore, it is conceivable that the light emitting element, at least in the non-operating position, can be arranged fully or partially in a recess that is formed in the container ceiling. This way, motion of the planting walls is not obstructed, impeded or otherwise complicated. The light emitting element can be particularly a controllable LED in order to realize a wide spectrum of wavelengths and therefore allowing irradiation of a variety of different plants.

In a preferred embodiment of the present invention, the lighting system comprises a holding means with a free end section and a connecting end section, wherein the holding means is connected to the container ceiling by means of its connecting end section, wherein the free end section comprises the light emitting element, wherein the holding means is pivotable relative to the container ceiling. The holding means can be formed as a bar, rod or column having two end sections. The holding means can have different cross sections, for instance circular or rectangular. By means of a hinge, the connecting end section of the holding means can be connected to the container ceiling. The hinge can be arranged entirely or partly in a recess. The light emitting element can be arranged at the free end section. As a result, pivoting the holding means within the meaning of the invention can mean that a point of the holding means arranged at the connecting end section remains at all times stationary or fixed, while another point of the holding means - especially another point that is identical with the position of the light emitting element - can be moved along a circumference or a partial periphery of a circle, for instance along a quarter circle arc. However, it is also conceivable that the holding means is formed as telescopically. In other words, a length of the holding means can be variable or changeable. This way, it is advantageously possible to change the distance of the light emitting element with respect to the connecting end section and the container ceiling which enables for the light emitting element other trajectories than a circle or quarter circle. Moreover, due to two degrees of freedom of motion of the light emitting element, a possible area of irradiation on a planting wall can be increased since the range of motion of the light emitting element can be extended. Holding means, especially elongated or longish holding means, can be arranged perpendicularly to the container ceiling in the operating position.

In a preferred embodiment of the present invention, the lighting system comprises a holding means with a holding axis, wherein the container ceiling comprises a two-dimensional surface or a two-dimensional surface portion,
wherein, in the non-operating position, the holding axis is parallel to the surface or the surface portion,
wherein, in the operating position, an angle is formed between the holding axis and the surface or the surface portion. A surface or a surface portion of the container ceiling within the meaning of the invention is particularly a surface or a surface portion that faces an internal space of the container. Said surface or surface portion can be also formed within a recess that is formed in the container ceiling. The recess can be particularly cuboid, the recess comprising a base surface, four lateral surfaces and an opening. A range of motion of the holding means, that is a distance between the operating and the non-operating position, can be limited from zero degrees to ninety degrees. However, it is also possible for the holding means to be moved from zero to 180 degrees.

It is conceivable that the holding means comprises a first portion and a second portion, wherein the first portion is rotatably connected to the second portion, particularly by means of an interconnecting hinge. The first and second portion can be formed as bars. Each bar can comprise a constant length, especially the same length. Thereby, it is advantageously possible to arrange the first and second portion parallel to each other. This way, it is possible to increase the range of motion of the holding means by a factor of two.

In an advantageous embodiment of the invention, multiple light emitting elements are arranged between two adjacent planting walls. The light emitting elements can be spaced apart equidistantly. Furthermore, the light emitting elements can be arranged along a straight line or a zigzag line.

In a preferred embodiment of the invention, multiple light emitting elements are arranged between two adjacent planting walls, wherein the multiple light emitting elements are arranged in a plane parallel to the planting walls, wherein the container is configured such that two adjacent light emitting elements
are pivoted towards each other when moving from the operating position to the non-operating position, and away from each other when moving from the non-operating position to the operating position, and
remain parallel to the planting walls and within the plane when moved between the operating position and the non-operating position. According to such a configuration, a distance between the light emitting elements and the planting walls can remain constant. The motion of the two adjacent light emitting elements can be synchronous or time-displaced.

According to a preferred embodiment of the present invention, multiple light emitting elements are arranged between two adjacent planting walls, wherein a first light emitting element is movable within a first plane and a second light emitting element is movable within a second plane, wherein a first angle is formed between the first plane and a planting wall, wherein a second angle is formed between the second plane and a planting wall, wherein the first angle and the second angle are
greater than zero degrees, and
less than or equal to ninety degrees. In other words, the first plane and the second plane are inclined versus all planting walls. This way, light emitting elements can be arranged closely to each other which results in the advantage of compactness. If need be, the number of light emitting elements between two adjacent planting walls can be increased, for instance to increase the (irradiance) intensity. The first plane and the second plane are particularly un-identical so as to avoid a possible collision of the first light emitting element and the second light emitting element. The first plane and the second plane are particularly parallel to each other. Furthermore, preferably, the first light emitting element is arranged on, in or at a first holding means and, preferably, the second light emitting element is arranged on, in or at a second holding means, wherein the first holding means and the second holding means are, preferably, also movable respectively within the first plane and the second plane. The advantage that results from such a configuration is avoidance of collision. Preferably, the number of light emitting elements between two adjacent planting walls is even. As a result, it is advantageously possible to irradiate both adjacent planting walls with the same number of light emitting elements. However, as all light emitting element can be configured pivotably, it is, depending on the application, also possible to irradiate a single adjacent planting wall.

According to an advantageous embodiment of the invention, the lighting system comprises a holding means that comprises multiple light emitting elements. The multiple light emitting elements can be especially arranged along a length or height of a holding means. The multiple light emitting elements can be also arranged on two opposing surface portions of the holding means. Or a combination thereof: The multiple light emitting elements can be arranged along a length or height of a holding means and on two opposing surface portions of the holding means. For instance, two, four, six, eight, ten, twelve etc. controllable LEDs can be arranged in total on one single holding means.

Preferably, the lighting system comprises a holding means, wherein the holding means comprises an elongated portion, particularly a rail, bar, beam, column or cantilever, wherein the elongated portion comprises the multiple light emitting elements. The elongated portion is particularly parallel to the planting walls. Furthermore, the elongated portion is particularly parallel to the container ceiling or a surface or surface portion thereof. Preferably, the elongated portion is - in both the operating position and the non-operating position - parallel to the planting walls and to a surface or surface portion of the container ceiling. However, the elongated portion can also be perpendicular to the planting walls and/or the container ceiling or a surface thereof. The holding means that comprises the elongated portion can further comprise one or two holding arms for holding the elongated portion, especially for holding the elongated portion on two opposing sides of the elongated portion. In other words, a first holding arm can be connected to the elongated portion in a first end or first end face of the elongated portion and a second holding arm can be connected to the elongated portion in a second end or second end face of the elongated portion. In such a configuration, the holding arms can be also named lateral holding arms. The lateral holding arms can perpendicular to and be rotatably connected to the elongated portion. The lateral holding arms can be connected to the container ceiling and the elongated portion can be pivoted between the operating and non-operating position. However, it is also conceivable that the one or the two holding arms are connected to the elongated portion in a middle section of the elongated portion. The one holding arm or the two holding arms can respectively be formed as two-piece arms. In other words, a holding arm can comprise two sub-arms, a first sub-arm and a second sub-arm, the sub-arms preferably being connected to each other by means of a hinge and further being, preferably, arranged in two parallel planes in all conceivable positions. As a result, it is advantageously possible to increase the range of motion of the elongated portion as the sub-arms can be unfolded by rotating the first sub-arm relative to the second sub-arm. In case the elongated portion is formed as a cantilever - with a free end - one holding arm can be sufficient to hold the light emitting elements arranged on the cantilever.

Preferably, the lighting system comprises a holding means, wherein the holding means comprises a light emitting element, wherein the light emitting element is movable relative to the holdings means. The light emitting element can be rotatably connected to the holding means, for instance by means of a hinge. Therefore, an orientation of the light emitting element can be modified, the light emitting element irradiating another section of a planting wall.

According to a preferred embodiment of the present invention, the lighting system comprises a holding means, wherein the holding means comprises a light emitting element,
wherein the container ceiling comprises a two-dimensional surface or a two-dimensional surface portion,
wherein the light emitting element and/or the holding means is translationally movable along a direction perpendicular to the surface or surface portion. The light emitting element can have a variable position on the or relative to the holding means. Preferably, the holding means can be moved translationally and perpendicularly to the ceiling. Due to a connection of the light emitting element to the holding means - for instance a fixed or rotatable connection and therefore a fixed position of the light emitting element on the holding means - the light emitting element can be moved also translationally and in a direction perpendicular to the ceiling or a surface thereof.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### Brief description of the drawings

- Figure 1: illustrates in a side view schematically an inventive vertical farming container according to an exemplary first embodiment of the present invention.
- Figure 2: illustrates schematically a plan view of a container ceiling of the vertical farming container according to the first embodiment of the invention shown in figure 1.
- Figure 3: illustrates schematically two light emitting elements pivoting towards each other while moving from the operating position to the non-operating position.
- Figure 4: illustrates schematically two light emitting elements pivoting within two different planes that are parallel to each other, the two planes forming respectively an angle relative to a planting wall.
- Figure 5a: illustrates schematically a holding means with multiple light emitting elements according to a second embodiment of the present invention in a perspective view.
- Figure 5b: illustrates schematically a holding means with multiple light emitting elements according to a third embodiment of the present invention in a perspective view.
- Figure 5c: illustrates schematically a two-piece holding arm for holding an elongated portion of the holding means in a side view.

### Detailed description

The present invention will be described with respect to particular embodiments and with reference to certain drawings but the invention is not limited thereto but only by the claims. The drawings described are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

Disclosures of the documents WO 2023/175133 A1, WO 2023/175134 A1 and WO 2023/175135 A1 are incorporated as reference.

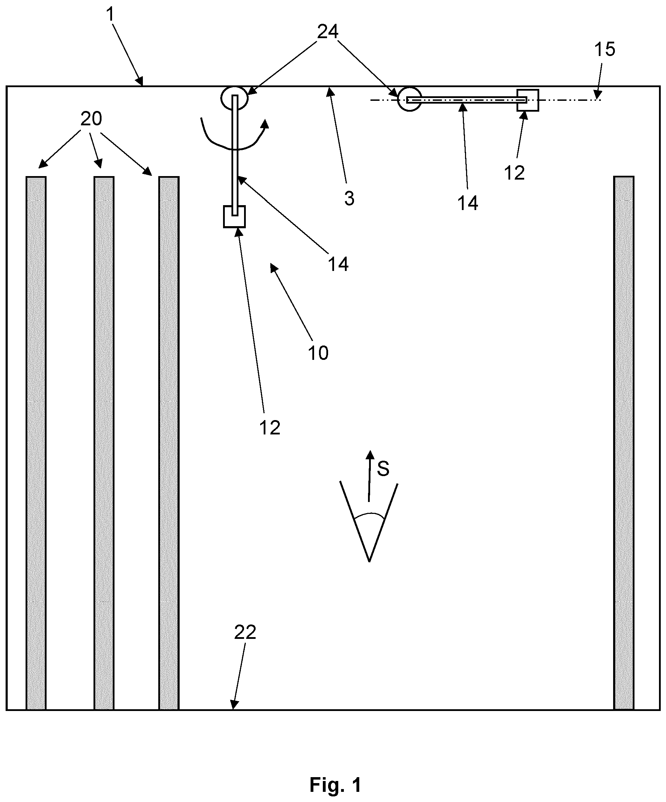

**In** **figure 1****,** an inventive vertical farming container 1 according to an exemplary first embodiment of the present invention is illustrated schematically in a side view. The vertical farming container 1 comprises multiple planting walls 20. For illustration purposes, only four planting walls 20 are shown in figure 1. The planting walls are arranged parallel to each other. Furthermore, the planting walls 20 are movable towards each other translationally along rails that are formed in a container ground 22. With respect to figure 1, the planting walls 20 can be moved to the left or to the right so that their respective distance can be changed. Plants and/or plant receptacles can be implanted or arranged in or on the planting walls 20.

A vertical farming container 1 that is subject to the present invention can be configured like and/or comprise features of the vertical farming containers disclosed in the documents WO 2023/175133 A1, WO 2023/175134 A1 and WO 2023/175135 A1.

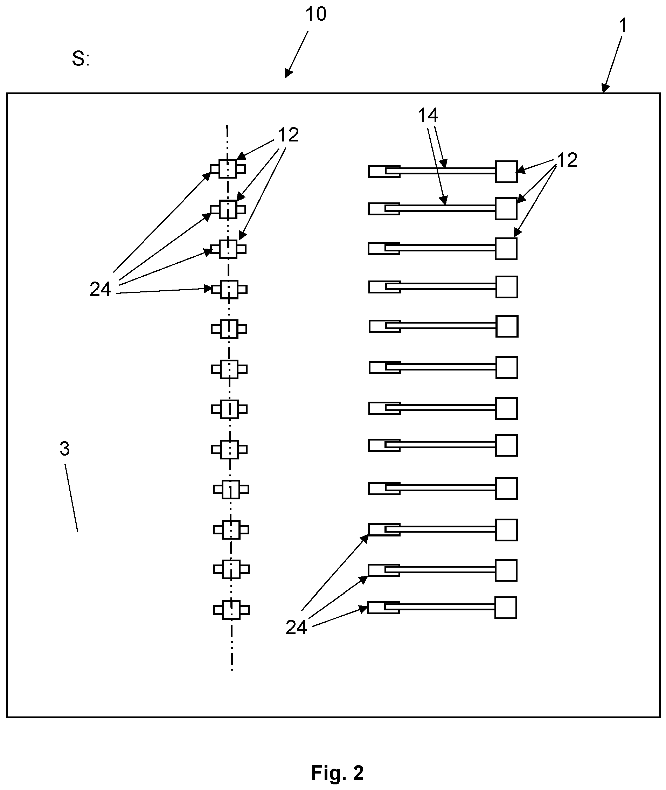

The vertical farming container 1 according to the present invention further comprises a container ceiling 3 and a lighting system 10. The lighting system 10 comprises multiple light emitting elements 12 that are arranged in a rows or straight lines, all light emitting elements 12 being controllable LEDs 12 for irradiating the plants and/or plant receptacles. Also, for illustration purposes, only two rows of LEDs 12 are shown in figure 1, a left or first row and a right or second row. However, only one foremost or frontmost LED 12 per row is visible in figure 1 as the LEDs 12 of the same row are arranged one behind the other with regards to the side view in figure 1. The LEDs 12 that are invisible in figure 1 are illustrated in figure 2 and will be further described hereinafter.

The LEDs 12 of the left row are shown in an operating position. In the operating position, plants are being cultivated by irradiation. In other words, LEDs 12 are in operation in the operating position of the LED 12. Each LED 12 is connected to a holding means 14 that is, according to the first embodiment of the invention, formed schematically as a bar. Furthermore, the holding means 14 are connected to the container ceiling 3 by means of a hinge 24. The hinges 24 (schematically shown as circles in figure 1) allow for rotation (hinted to by the curved arrow) around an axis parallel to a direction perpendicular to the figure plane. In the operating position, the holding means 14 are arranged perpendicularly to the ceiling 3. On the left-hand side of figure 1, the LEDs 12 are in the operating position. In the shown first embodiment, the LEDs 12 are pivotable relative to the container ceiling 3.

Pivoting of the LEDs 12 allow for the transition from the operating position to a non-operating position respectively (for each LED 12). The right row in figure 1 shows, exemplarily by means of the frontmost LED 12, the non-operating position of LEDs according to the first embodiment of the container 1. In the non-operating position, a holding axis 15 of the longish or elongated holding means 14 is parallel to the ceiling 3 or to an inner surface thereof. It is obvious from figure 1 that in the non-operating position, the lighting system 10 takes up less space within the vertical farming container 1. Planting walls 20 can only be moved free of collision in the non-operating position.

**Figure 2** illustrates schematically a plan view of the container ceiling 3 from the direction of the container ground 22 to the container ceiling 3. In other words, the direction in which the ceiling 3 is shown is symbolized by the sight of direction S and the eye symbol in figure 1.

On the left-hand side of figure 2, the first row (hinted to by the double dotted and dashed line) comprises twelve LEDs 12 in the operating position. On the right-hand side of figure 2, the second row comprises twelve LEDs 12 in the non-operating position. One such row that can be in both said positions is positioned between each two adjacent planting walls 20.

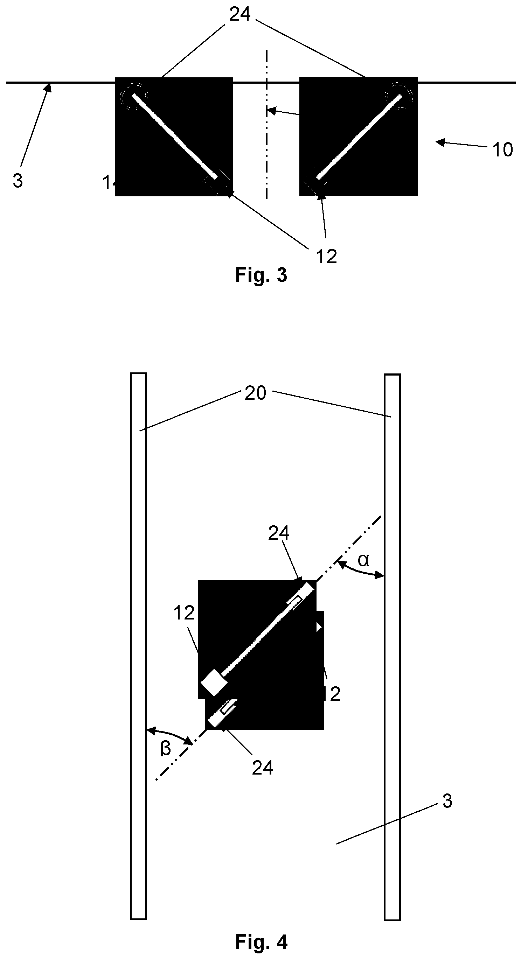

**Figure 3** illustrates two light emitting elements 12 pivoting towards each other while moving from the operating position to the non-operating position. The two light emitting elements 12 that can be seen as an LED pair are both controllable LEDs 12. The LEDs 12 are arranged between two adjacent planting walls 20. However, for the sake of simplicity, the planting walls 20 are not shown in figure 3. Also, other pairs of LEDs 12 can be arranged between the two adjacent planting walls 20.

The LEDs 12 are arranged in one single plane that is in between and parallel to the planting walls 20. Figure 3 is a snap-shot in time. The LEDs 12 are shown in a moment when they are being pivoted towards each other in order to transition from the operating position to the non-operating position. In the non-operating position, the holding means 14 are parallel to and colinear with each other. Analogously, the LEDs are being moved away from each other when transitioning from the non-operating position back to the operating position. In the operating position, the holding axis 15 of holding means 14 is perpendicular to the container ceiling or a surface thereof. During the transitioning between the operating position and the non-operating position, both LEDs 12 and both holding means 14 remain parallel to the planting walls (20). This simple configuration allows for collision-free operation of the lighting system 10.

It is conceivable that the two holding means 14 shown in figure 3 are moved in a time-displaced manner. In other words, one of the two holding means 14 - and along with it the corresponding LED 12 - can start motion from the operating position to the non-operating position or from the non-operating position to the operating position and only then the other of the two holding means - and along with it the corresponding other LED 12 - can start motion. However, in figure 3, both holding means 14 and both LEDs 12 move simultaneously. As a result, the motion of the two LEDs 12 shown in figure 3 are symmetrical with respect to a symmetry plane E perpendicular to the two adjacent planting walls 20.

**Figure 4** illustrates schematically two LEDs 12 pivoting within two different planes that are parallel to each other, the two planes forming respectively an angle α, β relative to a planting wall 20. With respect to figure 4, both planes are arranged perpendicular to the drawing plane. Due to the parallelism of the two planes, the first angle α and the second angle β are identical.

Such an embodiment of the invention as shown in figure 4 allows for a compact solution. Also, a possible distance of two adjacent planting walls 20 can be minimized as a consequence of the inclination of the holding means 14 relative to the planting walls 20. If the holding means 14 were perpendicular to the planting walls 20, the minimum distance between the two adjacent planting walls 20 were larger.

The two LEDs 12 illustrated in figure 4 are shown in the non-operating position. In other words, the holding means 14 are arranged parallel to the container ceiling 3. The view in figure 4 is the same as in figure 2, meaning that figure 4 is shown in the direction of sight S. The direction of sight S is illustrated or hinted to in figure 1 by the symbolic eye. Also, the configuration in figure 4 is such that the two shown LEDs 12 pivot or rotate in opposite direction, one LED 12 in a clockwise direction and the other in a counter-clockwise direction. However, the container 1 can be such that the two LEDs 12 can pivot in resonance, that is always in the same direction. Also, the LEDs 12 can be pivoted simultaneously or in a time-displaced manner.

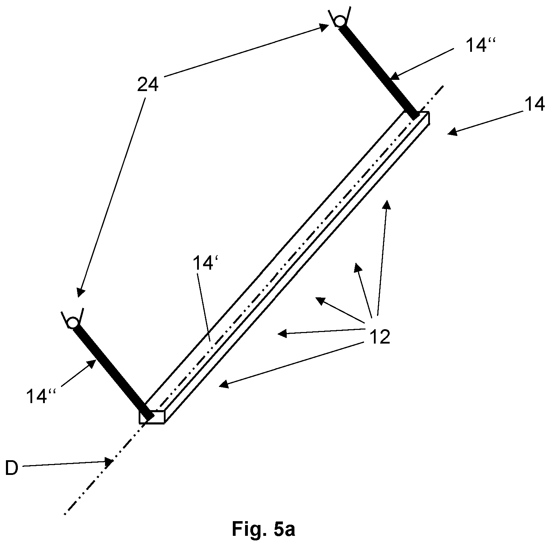

**Figure 5a** illustrates schematically a holding means 14 with multiple light emitting elements according to a second embodiment of the present invention in a perspective view. According to embodiments that were shown in the preceding figures 1 to 4, a holding means 14 comprises one single light emitting element 12 or LED 12. However, according to the embodiment shown in figure 5a, the holding means 14 comprises multiple LEDs 12. Five arrows are drawn in into figure 5a, alluding to five LEDs 12 on a bottom side of the holding means 14. However, the number of LEDs 12 can be larger or less than five.

The holding means 14 according to the second embodiment comprises an elongated portion 14' that remains at all times - when immobile or when being moved between the operating and the non-operating position or vice versa - parallel to the container ceiling 3. Therefore, when the LEDs 12 are in the non-operating position, a main extension direction of the elongated portion 14' is parallel to the container ceiling 3. In the operating position, the LEDs can be arranged on a bottom surface or a lateral surface of the elongated portion 14'. The multiple LEDs 12 can also be arranged on two lateral surfaces of the elongated portion 14', especially on two lateral surfaces that are parallel to each other. Also, LEDs 12 can be arranged on a bottom surface and two lateral surfaces of the elongated portion 14' (combined configuration with LEDs 12 on bottom surface and lateral surfaces).

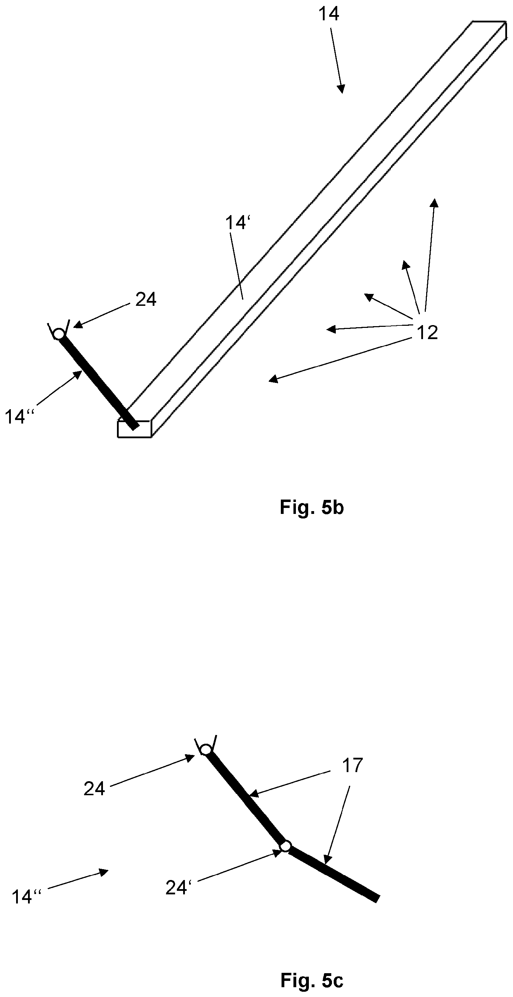

The holding means 14 further comprises two holding arms 14". The holding arms 14" are laterally connected to the elongated portion 14' at respectively an end face of the elongated portion 14'. The connection between the holding arms 14" and the elongated portion 14' is rotatable. However, it is also conceivable that the connection is a fixed connection. Furthermore, the holding arms 14" can comprise two sub-arms 17 as is shown in figure 5c.

**Figure 5b** illustrates schematically an alternative holding means 14 with multiple light emitting elements 12 or LEDs12 according to a third embodiment of the present invention in a perspective view. The elongated portion 14' according to the third embodiment is formed as a cantilever. In other words, the elongated portion 14' comprises a free end and a connecting. The features described within the framework of the second embodiment (figure 5a) also apply to the third embodiment (figure 5b).

**Figure 5c** illustrates schematically a two-piece holding arm 14" for holding an elongated portion 14' of the holding means 14 in a side view. The two sub-arms 17 can be identical or different, especially different in length. The two sub-arms 17 are rotatably connected to each other by means of an intermediate hinge 24'. Two sub-arms 17 have the advantage of a greater range of motion of the elongated portion 14'. Therefore the LEDs 12 can have a greater range of motion and, so to speak, dive deeper into the space or corridor between the two adjacent planting walls 20.

### List of reference signs

- 1: Vertical farming container
- 3: Container ceiling

- 10: Lighting system
- 12: Light emitting element, LED
- 14: Holding means
- 14': Elongated portion of the holding means
- 14": Holding arm
- 15: Holding axis
- 17: Sub-arm

- 20: Planting wall
- 22: Container ground
- 24: Hinge
- 24': Intermediate hinge

- D: Main extension direction of the elongated portion
- E: Symmetry plane
- S: Direction of sight

- α: First angle
- β: Second angle

## Claims

1. Vertical farming container (1) comprising
multiple planting walls (20), wherein the planting walls (20) are arranged parallel to each other, wherein the planting walls (20) are movable towards each other,
a container ceiling (3), and
a lighting system (10) that is directly or indirectly connected to the container ceiling (3), wherein the lighting system (10) comprises at least one light emitting element (12), particularly a controllable LED (12),
wherein the light emitting element (12) is pivotable relative to the container ceiling (3) between an operating position and a non-operating position.

2. Vertical farming container (1) according to claim 1, wherein the lighting system (10) comprises a holding means (14) with a free end section (14F) and a connecting end section (14C), wherein the holding means (14) is connected to the container ceiling (3) by means of its connecting end section (14C), wherein the free end section (14F) comprises the light emitting element (12), wherein the holding means (14) is pivotable relative to the container ceiling (3).

3. Vertical farming container (1) according to claim 1 or 2, wherein the lighting system (10) comprises a holding means (14) with a holding axis (15), wherein the container ceiling (3) comprises a two-dimensional surface (16) or a two-dimensional surface portion (16),
wherein, in the non-operating position, the holding axis (15) is parallel to the surface (16) or the surface portion (16),
wherein, in the operating position, an angle is formed between the holding axis (15) and the surface (16) or the surface portion (16).

4. Vertical farming container (1) according to any one of the preceding claims, wherein multiple light emitting elements (12) are arranged between two adjacent planting walls (20).

5. Vertical farming container (1) according to any one of the preceding claims, wherein multiple light emitting elements (12) are arranged between two adjacent planting walls (20), wherein the multiple light emitting elements (12) are arranged in a plane parallel to the planting walls (20), wherein the container (1) is configured such that two adjacent light emitting elements (12)
are pivoted towards each other when moving from the operating position to the non-operating position, and away from each other when moving from the non-operating position to the operating position, and
remain parallel to the planting walls (20) and within the plane when moved between the operating position and the non-operating position.

6. Vertical farming container (1) according to any one of the claims 1 to 4, wherein multiple light emitting elements (12) are arranged between two adjacent planting walls (20), wherein a first light emitting element (12) is movable within a first plane and a second light emitting element (12) is movable within a second plane, wherein a first angle (α) is formed between the first plane and a planting wall (20), wherein a second angle (β) is formed between the second plane and a planting wall (20), wherein the first angle (α) and the second angle (β) are
greater than zero degrees, and
less than or equal to ninety degrees.

7. Vertical farming container (1) according to any one of the preceding claims, wherein the lighting system (10) comprises a holding means (14) that comprises multiple light emitting elements (12).

8. Vertical farming container (1) according to any one of the preceding claims, wherein the lighting system (10) comprises a holding means (14), wherein the holding means (14) comprises an elongated portion, particularly a rail, bar, beam, column or cantilever, wherein the elongated portion comprises the multiple light emitting elements (12).

9. Vertical farming container (1) according to any one of the preceding claims, wherein the lighting system (10) comprises a holding means (14), wherein the holding means (14) comprises a light emitting element (12), wherein the light emitting element (12) is movable relative to the holdings means (14).

10. Vertical farming container (1) according to any one of the preceding claims,
wherein the lighting system (10) comprises a holding means (14), wherein the holding means (14) comprises a light emitting element (12),
wherein the container ceiling (3) comprises a two-dimensional surface (16) or a two-dimensional surface portion (16),
wherein the light emitting element (12) and/or the holding means (14) is translationally movable along a direction perpendicular to the surface (16) or surface portion (16).
